# EUROPÄISCHE PATENTSCHRIFT

(11) **EP 3 789 856 B1**
(45) Veröffentlichungstag und Bekanntmachung des Hinweises auf die Patenterteilung: **08.03.2023**
(21) Anmeldenummer: 20189570.3
(22) Anmeldetag: 05.08.2020
(51) Int. Cl.: G06F 3/0354, G06F 3/0362, G06F 3/044

(54) **EINGABEGERÄT MIT BERÜHREMPFINDLICHER EINGABEFLÄCHE UND BEWEGLICH AN EINEM SOCKEL GELAGERTES EINGABETEIL WOBEI DER SOCKEL SELEKTIV MAGNETISCH AUF DER EINGABEFLÄCHE FESTLEGBAR IST UND ZUGEHÖRIGES EINGABEVERFAHREN**
INPUT DEVICE WITH TOUCH SENSITIVE INPUT SURFACE AND INPUT SECTION MOVABLY MOUNTED ON A BASE, WHEREIN THE BASE IS SELECTIVELY MAGNETICALLY ATTACHABLE TO THE INPUT SURFACE AND ASSOCIATED INPUT METHOD
APPAREIL DE SAISIE DOTÉ D'UNE SURFACE DE SAISIE TACTILE ET PARTIE DE SAISIE MOBILE MONTÉE SUR UN SOCLE, LE SOCLE POUVANT ÊTRE SÉLECTIVEMENT FIXÉ DE MANIÈRE MAGNÉTIQUE SUR LA SURFACE DE SAISIE ET PROCÉDÉ DE SAISIE ASSOCIÉ

(30) Priorität: 09.09.2019 DE 102019124114
(43) Veröffentlichungstag der Anmeldung: 10.03.2021
(73) Patentinhaber: Preh GmbH, 97616 Bad Neustadt a.d. Saale (DE)
(72) Erfinder: WITTWER, Manuel, 97647 Sondheim (DE); DEMAR, Mario, 97640 Hendungen (DE); SCHMIDT, Benedikt, 97650 Fladungen (DE)
(74) Vertreter: Lohmanns, Bernard

(56) Entgegenhaltungen:
- EP-A2- 2 511 807
- DE-A1-102015 221 927
- DE-A1-102017 204 976
- US-A- 4 158 216
- MALTE WEISS ET AL: "Madgets", UIST '10 : PROCEEDINGS OF THE TWENTY-THIRD ANNUAL ACM SYMPOSIUM ON USER INTERFACE SOFTWARE AND TECHNOLOGY, ACM, US, 3. Oktober 2010 (2010-10-03), Seiten 293-302, XP058091347, DOI: 10.1145/1866029.1866075 ISBN: 978-1-4503-0271-5

## Beschreibung

Die Erfindung betrifft ein Eingabegerät, insbesondere für ein Kraftfahrzeug, mit einem eine berührempfindliche Eingabefläche bereitstellenden Touchpad oder Touchscreen und einer Berührdetektionseinrichtung, wobei letztere ausgebildet ist, eine Berührung der Eingabefläche zu detektieren. Während ein Touchpad als ein anzeigeloses Eingabegerät verstanden wird, wird als Touchscreen ein um eine Pixelmatrixanzeige ergänztes Eingabegerät verstanden, bei dem der berührempfindlichen Eingabefläche eine durch die Pixelmatrixanzeige erzeugte Anzeigefläche zugeordnet ist. Eingabegeräte dieser Art werden in Kraftfahrzeugen zur Steuerung von Fahrzeugkomponenten eingesetzt und dienen unter anderem zur Steuerung von Informations- oder Kommunikationseinrichtungen oder zur Klimasteuerung. Beispiele dafür sind ein Abspielgerät für Musikdateien, ein Navigationsgerät oder eine Bedienoberfläche zur Einstellung von Fahrzeugfunktionen.

Die Schaffung einer zusätzlichen händischen Bedieneingabe durch Anordnung eines beweglich gelagerten Eingabeteils auf einem Touchscreen oder Touchpad hat den Vorteil, dass sich der Bediener leichter ohne visuelle Überprüfung haptisch orientieren kann und die händische Bedieneingabe meist schneller und meist ganz ohne visuelle Überprüfung über das Eingabeteil vorgenommen werden kann im Vergleich zu einer Eingabe auf und über die berührempfindliche Eingabefläche, beispielsweise durch eine Wischgeste. Die DE 10 2006 043 208 A1 offenbart einen auf einem Touchscreen angeordneten Drehsteller. Das Eingabeteil ist beispielsweise vorgesehen, ein Bedienmenü durchlaufen oder ein oder mehrere Menüpunkte auswählen zu können.

Typischerweise ist das Betätigungsteil beweglich an einem Sockel gelagert, der entweder durch eine äußere die Eingabefläche ausbildende Schicht des Touchpads oder Touchscreens ausgebildet ist oder der Sockel ist durch kraft- oder stoffschlüssige Verbindung an der die Eingabefläche ausbildenden, äußeren Schicht des Touchpads oder Touchscreens dauerhaft festgelegt. Die dauerhafte Festlegung des Betätigungsteils an der berührempfindlichen Eingabefläche ist vergleichsweise unflexibel. Darüber hinaus stellt das die Eingabefläche überragende Eingabeteil ein nicht unerhebliches Verletzungsrisiko dar.

Weiss et al. (XP058091347, Madgets, UIST '10 : proceedings of the Twenty-Third Annual ACM Symposium on User Interface Software and Technology, doi:10.1145/1866029.1866075) offenbart ein System zur Betätigung von greifbaren magnetischen Widgets auf interaktiven Tischplatten. Das System kombiniert elektromagnetische Betätigung um physische Eingabeelemente zu bewegen und zu bedienen.

US4158216 A offenbart einen Drehknopf der mittels magnetischer Mittel auf einer Platte befestigt ist.

DE102015221927 A1 offenbart ein magnetisch befestigtes Drehbedienelement für die Steuerung von Fahrzeugkomponenten.

EP12163273 offenbart eine Bedieneinrichtung für ein Elektrogerät; diese weist einen TouchScreen auf, an dem als Halteeinrichtung ein Magnet angeordnet ist, um ein bewegbares Bedienelement darauf zu fixieren.

Vor diesem Hintergrund bestand Bedarf nach einer Lösung für ein gattungsgemäßes Eingabegerät mit Touchscreen oder Touchpad und zusätzlichem Eingabeteil, welches selektiv auf der berührempfindlichen Eingabefläche und möglichst überwindbar festlegbar ist und somit verbessert an unterschiedliche Bediensituation oder Bediengewohnheiten anpassbar ist, wobei ferner das Verletzungsrisiko im Crashfall verringert ist und wobei insbesondere die Aufbringung auf den Positionierort und/oder Veränderung des Positionierortes des Eingabeteils mit der Erzeugung eines haptischen Feedbacks verbunden ist und darüber hinaus zusätzliche Eingabemöglichkeiten geschaffen werden. Diese Aufgabe wird durch ein Eingabegerät gemäß Anspruch 1 gelöst. Eine gleichermaßen vorteilhafte Verwendung sowie ein Eingabeverfahren sind jeweils Gegenstand der nebengeordneten Ansprüche. Vorteilhafte Ausgestaltungen sind jeweils Gegenstand der abhängigen Ansprüche.

Die Erfindung betrifft ein Eingabegerät mit einem Touchpad oder Touchscreen, welche jeweils eine berührempfindliche Eingabefläche aufweisen. Gattungsgemäß ist der Eingabefläche eine Berührdetektionseinrichtung zur Detektion einer Berührung der berührempfindlichen Eingabefläche zugeordnet, wobei im Falle des Touchscreens ferner eine Anzeigefläche zugeordnet ist. Üblicherweise weisen der Touchscreen beziehungsweise das Touchpad einen Schichtaufbau auf. Der Schichtaufbau beinhaltet im Falle des Touchscreens eine transparente, äußere Schicht, die die dem Bediener zugewandte berührempfindliche Eingabefläche definiert. Der Schichtaufbau des Touchscreens beinhaltet ferner eine auf der dem Bediener abgewandten Seite der äußeren Schicht angeordnete Pixelmatrixanzeige mit einer durch die transparente äußere Schicht sichtbaren Anzeigeschicht, so dass für den Bediener der Anzeigeschicht die berührempfindliche Eingabefläche zugeordnet ist. Die Erfindung ist hinsichtlich der Pixelmatrixanzeige nicht eingeschränkt, beispielsweise handelt es sich um eine solche in LCD- oder OLED-Bauweise.

Die erfindungsgemäß vorgesehene Berührdetektionseinrichtung weist beispielsweise eine Detektionsschicht auf, die im Falle des Touchscreens meist transparent ausgebildet ist und vom Bediener aus gesehen über der Anzeigeschicht angeordnet ist. Die Detektionsschicht kann ausgebildet sein, eine Berührung der berührempfindlichen Eingabefläche kapazitiv, resistiv, induktiv, akustisch oder optisch zu detektieren. Bevorzugt ist die Detektionsschicht eine ein regelmäßiges Elektrodenarray ausbildende, leitfähige Schicht, um mittels des Elektrodenarrays ein Array von kapazitiven Messfeldern zu erzeugen, deren vom Ort der Berührung abhängige und durch die Berührung bewirkte Beeinflussung kapazitiv detektierbar ist. Die Elektroden sind beispielsweise in einer gemeinsamen Ebene oder auf zwei oder mehr parallelen Ebenen angeordnet. Beispielsweise ist dieses Elektrodenarray aus zwei Gruppen von Elektroden ausgebildet, die gruppenweise parallel zueinander angeordnet sind und die sich von Gruppe zu Gruppe bei senkrechter gedachter Projektion auf eine gemeinsame Ebene mehrfach durchkreuzen, beispielsweise orthogonal durchkreuzen, wobei sie aber dabei elektrisch isoliert zueinander angeordnet sind. So wird eine regelmäßige Gitterstruktur unter Ausbildung eines sogenannten Knotenpunktes an den Orten der Kreuzung ausgebildet. Der Abstand nächstbenachbarter Knotenpunkte beschreibt die Regelmäßigkeit oder Periodizität des Elektrodenarrays. Üblicherweise ist der kleinste Abstand der Knotenpunkte kennzeichnend für das Array. Dabei ist die Lage der durch die Elektroden zu erzeugenden Messfelder jeweils durch die Position der Knotenpunkte definiert. Beispielsweise wird die Elektrodenstruktur durch die beidseitige Beschichtung eines Foliensubstrats mit leitfähigem Material bereitgestellt.

Erfindungsgemäß ist ferner ein beweglich an einem Sockel gelagertes Eingabeteil vorgesehen, um die Vornahme einer händischen Bedieneingabe durch den Bediener zu ermöglichen. Der Sockel ist zur Positionierung auf der berührempfindlichen Eingabefläche ausgebildet und bevorzugt so ausgebildet, dass er relativ zur berührempfindlichen Eingabefläche in einer zur berührempfindlichen Eingabefläche parallelen Richtung verschiebbar ausgebildet ist. Das Eingabeteil weist einen Stellungsgeber zur berührungslosen Stellungsdetektion auf. Erfindungsgemäß ist eine mit dem Stellungsgeber zusammenwirkende Stellungsdetektionseinrichtung zur Detektion einer Stellung oder Verstellung des Eingabeteils vorgesehen, anders ausgedrückt es ist beispielsweise die absolute Stellung oder die relative Verstellung detektierbar. Der Begriff Stellungsgeber ist weit auszulegen und meint jegliche Einrichtung, die mit der Stellungsdetektionseinrichtung derart zusammenwirkt, dass eindeutige Rückschlüsse auf eine Stellungsänderung oder die Stellung des Eingabeteils ermöglicht sind. Als Stellungsgeber wird beispielsweise auch ein Schwingkreis verstanden. Beispielsweise ist die Eigenfrequenz des Schwingkreises von der Stellung des Betätigungsteils abhängig. Erfindungsgemäß ist das Eingabeteil drehbeweglich am Sockel gelagert und weist eine zur Eingabefläche orthogonale Drehachse auf.

Gemäß einer weiteren Ausgestaltung ist das Eingabeteil nicht nur drehbeweglich gelagert, sondern entlang der Drehachse entgegen einer Rückstellkraft translatorisch verschiebbar oder niederdrückbar gelagert und/oder entgegen einer Rückstellkraft verschwenkbar jeweils am Sockel gelagert.

In einer Ausgestaltung umfasst die Stellungsdetektionseinrichtung ferner einen mit dem Stellungsgeber zusammenwirkenden Sensor, wie ein kapazitiv, resistiv, optisch oder induktiv mit dem Stellungsgeber zusammenwirkender Sensor. Der Begriff Sensor ist weit auszulegen. Beispielsweise ist der Sensor in den Schichtaufbau des Touchscreens beziehungsweise Touchpads integriert. Bevorzugt ist die Stellungsdetektionseinrichtung dazu ausgelegt, die Position des Eingabeteils auf der Eingabefläche und/oder die Ausrichtung des Eingabeteils relativ zur Eingabefläche ortsaufgelöst, d.h. beispielsweise unter Ausgabe wenigstens zweidimensionaler Ortskoordinaten, zu detektieren. Beispielsweise umfasst die Stellungsdetektionseinrichtung eine flächenhaft ausgebildete Sensorschicht, wie eine Elektrodenschicht, die sich wenigstens bereichsweise parallel entlang der Eingabefläche erstreckt.

Beispielsweise umfasst die Stellungsdetektionseinrichtung ein Array von Induktionsspulen, wobei der Stellungsgeber in stellungsabhängig variierender induktiver Wechselwirkung mit dem Array von Induktionsspulen steht. Eine derartige Ausführungsform der Stellungsdetektionseinrichtung hat sich als besonders robust gegenüber Eindringen von Fremdstoffen, insbesondere von Wasser bzw. Feuchtigkeit sowie als besonders störunanfällig gegenüber elektromagnetischer Störung erwiesen.

Die Stellungsdetektionseinrichtung umfasst ferner beispielsweise eine Auswerteinheit zur Ermittlung einer Verstell- und/oder Stellungsinformation aus einem Sensorsignal des Sensors. Gemäß einer bevorzugten Ausgestaltung wird die zur Berührdetektionseinrichtung gehörige Detektionsschicht, beispielsweise das Elektrodenarray, als Sensor verwendet, die Stellung bzw. die Verstellung des Eingabeteils, beispielsweise kapazitiv, zu detektieren.

Erfindungsgemäß sind magnetische, wie permanentmagnetische, und/oder magnetisierbare, wie ferromagnetische, Mittel zur lösbaren und damit selektiven Festlegung des Sockels an einem Positionierort oder an mehreren Positionierorten auf der berührempfindlichen Eingabefläche vorgesehen. Somit ist das Eingabeteil samt Sockel reversibel von der berührempfindlichen Eingabefläche trennbar und kann beispielsweise zu Reinigungszwecken von der berührempfindlichen Eingabefläche abgenommen und wieder befestigt werden.

Erfindungsgemäß umfassen diese Mittel ein sockelseitiges, erstes Element und wenigstens ein in oder unter der berührempfindlichen Eingabefläche angeordnetes, mit dem ersten Element magnetisch zusammenwirkendes, zweites Element. Das zweite Element weist beispielsweise eine Ausdehnung auf, die der der Eingabefläche entspricht, so dass das erste Element bzw. der Sockel beliebig auf der Eingabefläche positionierbar ist. Der Bereich, bei dem es zur magnetischen Haftung, d.h. Festlegung des Sockels kommt, entspricht der Eingabefläche oder ist kleiner. Beispielsweise handelt es sich bei dem zweiten Element um ein ferromagnetisches Element, wie eine ferromagnetische Platte oder eine ferromagnetische Abdeckung. Diese Abdeckung oder Platte ist beispielsweise eine Komponente des Touchscreens oder des Touchpads.

Bevorzugt ist der mögliche Positionierort jeweils durch visuell und/oder haptisch wahrnehmbare Markierungen für den Bediener erkennbar. Als Haftung wird eine Fixierung des Eingabeteils verstanden, die ausreicht das Eingabeteil an dem jeweiligen Positionierort unter den aus fahrdynamischen Überlegungen zu erwartenden Bedingungen, wie auf das Eingabeteil wirkenden Fliehkräften, zu halten. In einer Ausgestaltung ist vorgesehen, dass die magnetische, durch die Wechselwirkung zwischen dem ersten Element und dem zweiten Element bewirkte Haftung an wenigstens einem Positionierort lokal besonders stark und ausgeprägt, was somit als haptisch wahrnehmbare Orientierungshilfe bei der Platzierung des Eingabeteils auf der Eingabefläche dient. Durch die lösbare Verbindung kann das Eingabeteil bedarfsweise entfernt werden oder es bieten sich je nach der Ausgestaltung der vorgenannten Mittel eine Mehrzahl an Positionierorte an.

Bevorzugt ist wenigstens ein Element aus erstem und zweitem Element permanentmagnetisch, auch als dauermagnetisch bezeichnet, ausgebildet. Noch bevorzugter ist wenigstens das erste, sockelseitige Element permanentmagnetisch. Beispielsweise ist das permanentmagnetische Material für das erste bzw. zweite Element eine Neodym-Eisen-Bor-Legierung.

Das Eingabeteil ist insgesamt gesehen, wahlweise d.h. selektiv auf der berührempfindlichen Eingabefläche festlegbar, wodurch somit das Eingabegerät verbessert an unterschiedliche Bediensituation oder Bediengewohnheiten anpassbar ist. Ferner ist das Verletzungsrisiko im Crashfall verringert, da die überwindbare magnetische Haftung ähnlich einer Sollbruchstelle fungiert. Insbesondere sorgt die magnetische Wechselwirkung während des Aufbringens auf den Positionierort und/oder während der Veränderung des Positionierortes für die Erzeugung eines haptischen Feedbacks, wodurch die Orientierung bei der Positionierung erleichtert wird.

Bevorzugt weist das zweite Element eine Maximalausdehnung parallel zur Ebene der Eingabefläche auf, die weniger als 1/10, bevorzugter weniger als 1/20 der Maximalausdehnung der berührempfindlichen Eingabefläche beträgt.

Bevorzugt weist das zweite Element eine Flächenausdehnung parallel zur Ebene der Eingabefläche auf, die mehr als 50%, bevorzugter mehr als 75%, meist bevorzugt 100 % oder mehr, der der Eingabefläche beträgt.

Bevorzugt sind die Mittel so ausgebildet, dass an wenigstens einem Positionierort, noch bevorzugter an zwei örtlich beabstandeten Positionierorten auf der berührempfindlichen Eingabefläche eine magnetische Haftung und damit überwindbare Festlegung des Sockels erreicht wird oder ein lokales Maximum der zwischen dem ersten Element und dem jeweiligen zweiten Element bewirkten Haftung erreicht wird. Beispielsweise sind mehrere räumlich beabstandet angeordnete Pole eines zweiten Elements oder mehrere, räumlich beabstandet angeordnete zweite Elemente vorgesehen, um jeweils zwei oder mehr räumlich beabstandete Positionierorte zu definieren.

Gemäß einer bevorzugten Ausgestaltung sind die Berührdetektionseinrichtung und/oder die Stellungsdetektionseinrichtung ausgebildet, ein händisches Überführen des Sockels von einem ursprünglichen Positionierort zu einem Auslöseort entlang einer zur Eingabefläche parallelen Richtung zu detektieren und diesem Überführen als weitere Eingabefunktionalität eine Schalt- oder Steuerfunktion zuzuordnen. Bevorzugter sind die Berührdetektionseinrichtung und/oder die Stellungsdetektionseinrichtung ausgelegt, eine Bewegung des Sockels entlang der berührempfindlichen Eingabefläche ortsaufgelöst zu detektieren, beispielsweise mittels eines Arrays von Spulen induktiv oder mittels eines Arrays von Elektroden kapazitiv oder resistiv zu detektieren, indem beispielsweise die Bewegung des ersten Elements und/oder die Bewegung des Stellungsgebers durch die Stellungsdetektionseinrichtung detektiert wird

Bevorzugt ist ferner mindestens ein außerhalb des ursprünglichen Positionierortes und außerhalb des Auslöseortes liegender Zielort vorgegeben, welcher beim Überführen des Sockels vom Sockel zwingend zumindest vorübergehend eingenommen werden muss, um mit dem Überführen an den Auslöseort die Schalt- oder Steuerfunktion zuzuordnen. Der Auslöseort kann beispielsweise der ursprüngliche Positionierort oder einer der anderen Positionierorte sein. Ist der Auslöseort der ursprüngliche Positionierort, so wird erst nach Rückführung des Sockels bzw. des Eingabeteils von dem Zielort an den ursprünglichen Positionierort als Auslöseort die besagte Zuordnung vorgenommen. Auf dem Weg der Verschiebung zwischen ursprünglichem Positionierort und Auslöseort können mehrere Zielorte vorgegeben sein.

Bevorzugt sind die Zielorte und gegebenenfalls der Auslöseort durch Visualisierung dem Bediener, beispielsweise auf der zum Touchscreen gehörigen, elektronischen Pixelmatrixanzeige kenntlich gemacht.

Erfindungsgemäß sind die magnetischen oder magnetisierbaren Mittel so ausgebildet sind, dass wenigstens zwei Positionierorte vorgesehen sind und die magnetisch bewirkte Haftung bezüglich der magnetischen Haftkraft sich an wenigstens zwei der Positionierorte unterscheidet. Beispielsweise wird so ein Verschieben oder Verdrehen des Sockels gegenüber der berührempfindlichen Eingabefläche an dem Positionierort mit der vergleichsweise geringen magnetischen Haftung ermöglicht, während an dem anderen Positionierort dieses Verdrehen weitgehend und zumindest bei ausschließlicher Berührung des Eingabeteils unterbunden ist.

Gemäß der Erfindung wird die mit dem Positionierort variierende magnetische Haftung dazu genutzt, die Rasthaptik einer Rasteinrichtung und/oder die Rückstellkraft einer Rückstelleinrichtung durch die vom Positionierort abhängig unterschiedliche magnetische Anziehung zwischen dem ersten und zweiten Element zu variieren, indem die Magnetkraft den Rasteingriff der Rasteinrichtung zu beeinflussen vermag und zwar in Abhängigkeit der Magnetkraft.

In einer Ausgestaltung ist vorgesehen, dass die magnetischen und/oder magnetisierbaren Mittel so ausgebildet sind, dass durch magnetische Wechselwirkung ein händisches Verschieben des Sockels vorgegeben ist, also das Verschieben magnetisch geführt ist.

Bevorzugt ist vorgesehen, dass das erste und/oder das zweite Element mehr als zweipolig sind und jeweils eine sich parallel zur Eingabefläche erstreckende Polausrichtung aufweisen. Dadurch ergeben sich mehrere unmittelbar benachbart angeordnete Positionierorte, wobei das Überführen von einem zum nächsten Positionierort nicht nur magnetisch geführt, sondern sich dabei ein Polrucken ähnliches haptisches Feedback bei der Verstellung zur erleichterten Orientierung ergibt.

Die Erfindung betrifft ferner die vorteilhafte Verwendung des Eingabegeräts in einer seiner zuvor beschriebenen Ausführungsformen in einem Kraftfahrzeug.

Gegenstand der Erfindung ist ferner ein Eingabeverfahren. In einem Bereitstellungsschritt wird ein Eingabegerät bereitgestellt. Dieses weist ein eine berührempfindliche Eingabefläche bereitstellendes Touchpad oder einen die berührempfindliche Eingabefläche bereitstellenden Touchscreen, mit jeweils einer Berührdetektionseinrichtung zur Detektion einer Berührung der berührempfindlichen Eingabefläche auf. Das bereitgestellte Eingabegerät umfasst ferner einen zur Positionierung auf der berührempfindlichen Eingabefläche ausgebildeten Sockel, sowie ein beweglich an dem Sockel gelagertes Eingabeteil, um eine Vornahme einer händischen Bedieneingabe durch den Bediener durch Verstellen des Eingabeteils zu ermöglichen. Das Eingabeteil weist einen sich synchron mit dem Eingabeteil bewegenden Stellungsgeber zur berührungslosen Stellungsdetektion auf.

Das bereitgestellte Eingabegerät weist ferner eine mit dem Stellungsgeber zusammenwirkende Stellungsdetektionseinrichtung zur Detektion einer Stellung oder Verstellung des Eingabeteils auf, um dem Detektionsergebnis eine Schalt- und/oder Steuerfunktion zuzuordnen. Bevorzugt sind die Berührdetektionseinrichtung und/oder die Stellungsdetektionseinrichtung ausgebildet, eine Bewegung des Sockels entlang einer zur Eingabefläche parallelen Richtung ortausgelöst zu detektieren, beispielsweise mittels eines Arrays von Spulen induktiv oder mittels eines Arrays von Elektroden kapazitiv oder resistiv zu detektieren.

Das bereitgestellte Eingabegerät weist magnetische und/oder magnetisierbare Mittel zur lösbaren, magnetischen Haftung des Sockels, also eine auf Magnetkräften beruhende und überwindbare Festlegung des Sockels, an einem Positionierort auf der berührempfindlichen Eingabefläche auf. Diese Mittel umfassen ein sockelseitiges erstes Element und wenigstens ein in oder unter der berührempfindlichen Eingabefläche angeordnetes, mit dem ersten Element magnetisch zusammenwirkendes, zweites Element.

Das erfindungsgemäße Verfahren weist ein Schritt des händischen Verschiebens des Sockels aus dem Positionierort entlang einer zur berührempfindlichen Eingabefläche parallelen Richtung entgegen einer durch die magnetische und/oder magnetisierbare Mittel erzeugten Rückstellkraft auf.

Das erfindungsgemäße Verfahren weist ferner einen Schritt der Detektion des Verschiebens des Sockels aus dem Positionierort mittels der Berührdetektionseinrichtung und/oder der Stellungsdetektionseinrichtung auf Bevorzugt ist die Stellungsdetektionseinrichtung dabei ausgelegt, die Position des Sockels und damit des Eingabeteils auf der Eingabefläche ortsaufgelöst, d.h. beispielsweise unter Ausgabe wenigstens zweidimensionaler Ortskoordinaten, zu detektieren. Beispielsweise umfasst die Stellungsdetektionseinrichtung eine flächenhaft ausgebildete Sensorschicht, wie eine Elektrodenschicht, die sich wenigstens bereichsweise parallel entlang der Eingabefläche erstreckt.

Das erfindungsgemäße Verfahren umfasst ein Schritt des Zuordnens einer Schalt- oder Steuerfunktion, sofern wenigstens ein vorgegebener Auslöseort, wie der ursprüngliche Positionierort als Rückkehrort durch den Sockel während des Verschiebeschrittes erreicht werden.

Das erfindungsgemäße Verfahren umfasst optional einen weiteren Schritt, bei dem wenigstens ein Zielort vor dem Verschieben des Sockels vorgegeben ist, beispielsweise durch Visualisierung. Der Zielort ist beispielsweise als Symbol, Menüpunkt oder Dergleichen auf der Eingabefläche angezeigt. In einer anderen Ausgestaltung ist eine externe außerhalb der Eingabefläche angeordnete elektronische Pixelmatrixanzeige vorgesehen und die Bewegung des Sockels wird durch einen sich synchron mit dem Sockel bewegenden und durch den Sockel steuerbaren, durch die Anzeige dargestellten Cursor visualisiert. Entsprechend ist der Zielort als notwendiges Anordnungsziel vor Erreichen des Auslöseorts auf der Anzeige visualisiert. Beispielsweise wird der oder werden die vorgegebenen Zielorte und/ die Auslöseorte kontextbezogen visualisiert. Als Kontext wird beispielsweise ein Fahrzeugzustand oder der Zustand eines Fahrzeugaggregats oder eine Eingabesituation betreffend einen Fahrzeugzustand oder den Zustand des Fahrzeugaggregats verstanden. Beispielsweise wird mittels Verbringen des Sockels an einen von zwei potenziell mögliche Auslöseorte eine Selektion aus einer beifahrerseitigen oder fahrerseitigen Schalt- oder Steuerfunktionalität eines Fahrzeugaggregats ausgewählt, um beispielsweise entweder die beifahrerseitige Temperatur oder fahrerseitige Temperatur einer Mehrzonen-Klimasteuerung einzustellen oder Dergleichen. Bezüglich weiterer Ausgestaltungen des bereitgestellten Eingabegeräts wird auf die eingangs beschriebenen Ausführungsformen und deren konstruktiven Merkmale verwiesen Die Erfindung wird anhand der nachfolgenden Figuren näher erläutert. Die Figuren sind dabei nur beispielhaft zu verstehen und stellen jeweils lediglich eine bevorzugte Ausführungsvariante dar. Es zeigen:
- Fig. 1: eine perspektivische Ansicht einer Ausführungsform des erfindungsgemäßen Eingabegeräts 1;
- Fig. 2: eine Schnittansicht der in Figur 1 gezeigten Ausführungsform des erfindungsgemäßen Eingabegeräts 1;
- Fig. 3: eine perspektivische Detailansicht der in Fig. 1 gezeigten Ausführungsform des erfindungsgemäßen Eingabegeräts 1, wobei diverse und kontextabhängig vorgegebene Zielorte als Auslöseorte angezeigt werden;
- Fig. 4: eine perspektivische Ansicht der in Fig. 1 gezeigten Ausführungsform des erfindungsgemäßen Eingabegeräts 1, wobei weitere diverse und kontextabhängig vorgegebene Zielorte als Auslöseorte angezeigt werden;
- Fig. 5: eine perspektivische Ansicht der in Fig. 1 gezeigten Ausführungsform des erfindungsgemäßen Eingabegeräts 1, wobei weitere diverse und kontextabhängig vorgegebene Zielorte als Auslöseorte angezeigt werden.

Das erfindungsgemäße Eingabegerät 1 ist zur Verwendung in einem nicht dargestellten Kraftfahrzeug vorgesehen und beispielsweise in einer zum Fahrzeug gehörenden Mittelkonsole oder einem Armaturenbrett angeordnet und dient der Vornahme von Bedieneingaben durch einen Bediener B. Dazu sind ist ein drehbeweglich gelagertes Eingabeteil 3 sowie ein Touchscreen 2 mit berührempfindlicher Eingabefläche 8 vorgesehen. Während die berührempfindliche Eingabefläche 8 der Vornahme einer herkömmlichen Eingabe unter Berührung, wie einer Wischgeste und Dergleichen, dient, ermöglicht das Eingabeteil 3, das drehbeweglich an einem auf der Eingabefläche 8 befindlichen Sockel 5 um eine zur berührempfindlichen Eingabefläche 8 orthogonalen Drehachse D gelagert ist, die Vornahme einer Dreheingabe durch den Bediener B. Da das Eingabeteil 3 leicht haptisch wahrnehmbar ist, ermöglicht es das erleichterte Wiederfinden und hilft bei der Orientierung auf der berührempfindlichen Eingabefläche 8. Es ist eine Berührdetektionseinrichtung zur Detektion einer Berührung auf der Eingabefläche 8 vorgesehen, mittels derer die Berührung kapazitiv durch lokale Beeinflussung eines Arrays von Messkapazitäten detektiert wird. Das Array von Messkapazitäten wird durch eine zur Berührdetektionseinrichtung gehörigen Detektionsschicht 2b erzeugt, die aus einer regelmäßigen Elektrodenstruktur ausgebildet ist. Die Elektrodenstruktur 2b ist aus in Spalten und Reihen organisierten, transparenten Elektroden ausgebildet. Die Beaufschlagung der Elektrodenstruktur 2b mit den Messkapazitäten sowie die Detektion deren Beeinflussung sowie die Ermittlung einer Berührung mit zugehörigem Berührort erfolgt durch eine nicht dargestellte, zur Berührdetektionseinrichtung gehörige Auswerteinheit.

Die Elektrodenstruktur 2b ist auf der dem Bediener B abgewandten Seite einer transparenten, äußeren Schicht 2b des Touchscreens 2 aus einem Glaswerkstoff oder transparentem Kunststoff aufgebracht, während die dem Bediener B zugewandte Seite der transparenten, äußeren Schicht 2a des Schichtaufbaus 2 die berührempfindliche Eingabefläche 8 definiert. Unter der transparenten, äußeren Schicht 2a und der die Detektionsschicht ausbildenden Elektrodenstruktur 2b ist eine die Pixelmatrixanzeige des Touchscreens ausbildende Anzeigeschicht 2c vorgesehen. Zu deren Hinterleuchtung ist auf der dem Bediener B abgewandten Seite des Touchscreens 2 eine Diffusorschicht 2d vorgesehen, in die Licht einer nicht dargestellten Lichtquelle eingekoppelt wird. Die Detektion einer Verstellung oder der Stellung des Eingabeteils 3 relativ zum Sockel 5 und damit relativ zur Eingabefläche 8 erfolgt durch eine Stellungsdetektionseinrichtung 2b, die wie durch das Bezugszeichen angedeutet, auf die Detektionsschicht 2b der Berührdetektionsschicht als Sensor zurückgreift und mit einem Stellungsgeber 4 zusammenwirkt, der am Eingabeteil 3 befestigt ist und sich somit synchron mit diesem bei einer durch den Bediener B vorgenommenen, händischen Verstellung mitbewegt.

Die gezeigte Ausgestaltung der Stellungsdetektionseinrichtung ist in den Figuren lediglich symbolisch zu verstehen. Je nach Wirkprinzip, wie optisches, magnetisches, induktives oder kapazitives Zusammenwirken kann sich eine von der Darstellung der Figuren andere Anordnung und Ausgestaltung des Stellungsgebers 4 und der Stellungsdetektionseinrichtung 2b ergeben. Beispielsweise ist eine bezüglich der Drehachse D des Eingabeteils 3 exzentrische Positionierung als auch eine Positionierung auf der Drehachse D des Stellungsgebers 4 möglich. Die Stellungsdetektionseinrichtung kann beispielsweise auch als ein Array von Induktionsspulen ausgebildet sein, die auf der dem Bediener B abgewandten Seite des Touchscreens 2 angeordnet sind oder in den Schichtaufbau des Touchscreens 2 integriert sind.

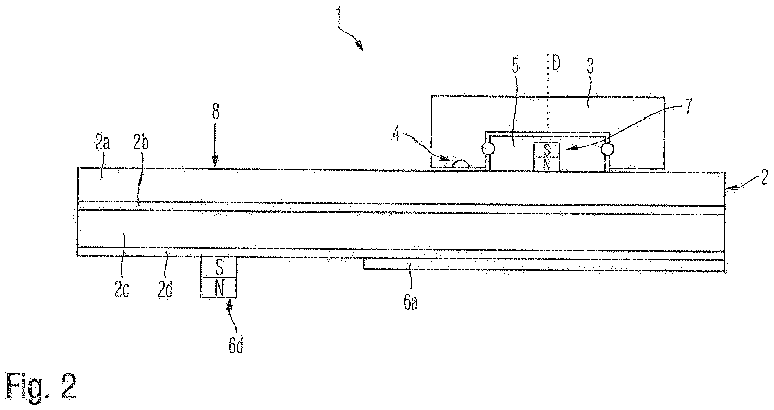

Zur ausschließlich magnetisch haftenden Festlegung des Sockels 5 auf der berührempfindlichen Eingabefläche 8 sind magnetisierbare bzw. magnetische Mittel in Form des am Sockel 5 festgelegten, permanentmagnetischen, ersten Elements 7 sowie zweite Elemente 6a bis 6e vorgesehen, wie die ferromagnetischen, zweiten Elemente 6a und 6b und die permanentmagnetischen, zweiten Elemente 6c, 6d und 6e, die jeweils, wie aus Figur 2 deutlich wird, auf der dem Bediener B abgewandten Seite des Touchscreens 2 angeordnet sind. Die zwischen dem ersten Element 7 und den zweiten Elementen 6a bis 6e wirkenden magnetischen Kräfte sorgen für eine überwindbare Haftkraft, so dass der Sockel 5 selektiv an durch die Lage der zweiten Elemente 6a bis 6e vorgegebenen Positionierorten, angeordnet werden kann, um dort jeweils durch die magnetische Haftkraft lösbar fixiert zu werden. Neben diesen zweiten, bezüglich ihrer Abmessungen im Vergleich zu Eingabefläche 8 keinen Elementen kann auch ferner eine ausgedehnte Platte als zweites Element vorgesehen sein, welches eine haftende Positionierung auch außerhalb der durch die gezeigten Elemente 6a bis 6e gestattet und sich die Positionierung an den zuvor beschriebenen zweiten, vergleichsweise kleinen Elementen 6a bis 6e dadurch auszeichnet, dass die magnetische Haftung besonders ausgeprägt ist.

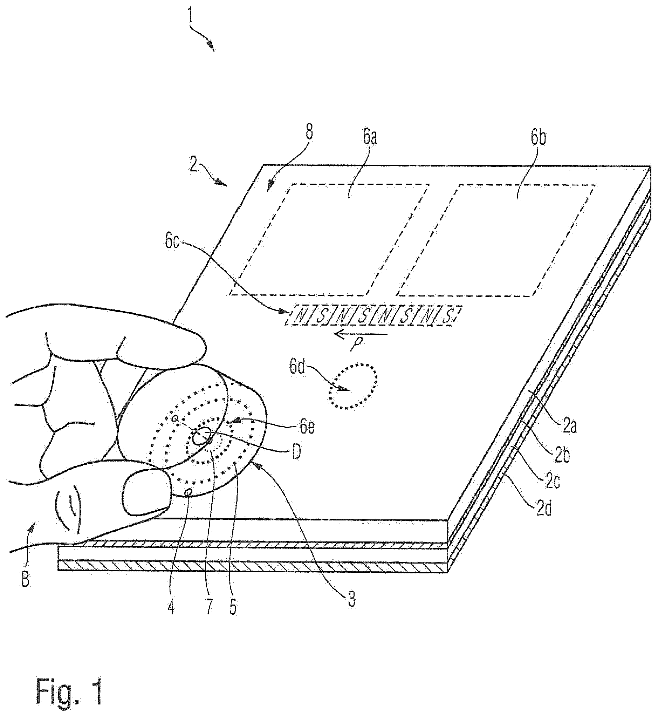

Wie aus den Figuren 1 und 2 ersichtlich, ist bei der magnetischen Paarung von permanentmagnetischen, ersten und zweiten Elementen eine Polausrichtung gewählt, dass sich ungleichnamige Pole nächstbenachbart gegenüberliegen. Die magnetische Haftwirkung zwischen jeweils dem ersten Element 7 und dem zweiten Element 6a bis 6e kann unterschiedlich ausfallen. Beispielsweise kann diese so variieren, dass die Rasthaptik einer nicht dargestellten, bei der Relativverstellung zwischen dem Eingabeteil 3 und dem Sockel 5 wirkenden Rasteinrichtung außer Kraft gesetzt wird. Dies kann sich beispielsweise dadurch ergeben, dass die Magnetkraft den Eingriff zwischen den zur Rasteinrichtung gehörigen Rastnase und der Rastkontur zu beeinflussen vermag. Gemäß der beanspruchten Erfindung ergibt es sich dadurch, dass die magnetische Haftkraft im Vergleich zu der die Verdrehung hemmenden Wirkung des Rasteingriffs so gering ausfällt, dass der Sockel 5 gegenüber der berührempfindlichen Eingabefläche seine Haftreibung überwindend sich zu verdrehen vermag.

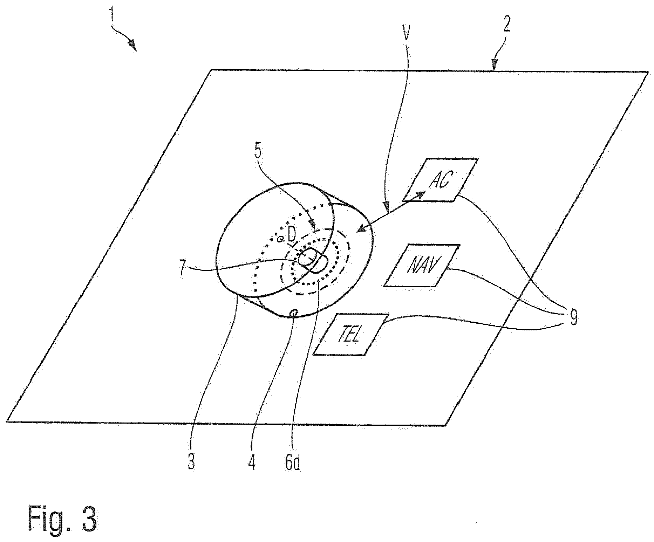

Die in der Figur 3 gezeigte Darstellung dient der Veranschaulichung einer Ausführungsform des erfindungsgemäßen Verfahrens, wobei lediglich das zweite Element 6d der Figuren 1 und 2 dargestellt ist. Wird das Eingabeteil 3 samt Sockel 5 aus dem durch das zweite Element 6d definierten Positionierort entlang der zur Eingabefläche 8 parallelen Verschieberichtung V verschoben und wird bei dieser Verschiebung einer der drei durch Visualisierung dem Benutzer kenntlich gemachten Auslöseorte erreicht, wird dies als kontextabhängige Menüauswahl verstanden. In einer Ausgestaltung kann vorgesehen sein, dass die Auslösung mit Erreichen der jeweiligen Anzeigefläche 9 noch nicht bewirkt wird, sondern wenn die jeweilige Anzeigefläche 9 als Zielort für den Sockel 5 dient und eingenommen werden muss und erst bei Rückkehr an den ursprünglichen Positionierort, welcher durch das zweite Element 6d vorgegeben ist und als Auslöseort fungiert, die Zuordnung erfolgt. Mit Erreichen und Einnehmen des Auslöseortes wird dem Eingabeteil 3 eine kontextabhängige und durch die zuvor erfolgte manuelle Auswahl einer der Anzeigeflächen 9 selektierte Schalt- bzw. Steuerfunktion zugeordnet, beispielsweise wird der Verstellung des Eingabeteils 3 um die Drehachse D als Eingabefunktionalität eine spezielle der drei durch die Anzeigeflächen 9 symbolisierten Steuerfunktionen zugeordnet. Beispielsweise wird durch diese Steuerfunktion ein Bedieneingabekontext geändert und es kommt zu einem Wechsel der Anzeigeflächen und/oder der Zielorte bzw. der Auslöseorte, wie es beispielsweise bei einer Menüauswahl der Fall ist, nachdem aus einer übergeordneten Menüauswahl ein Untermenü selektiert wird.

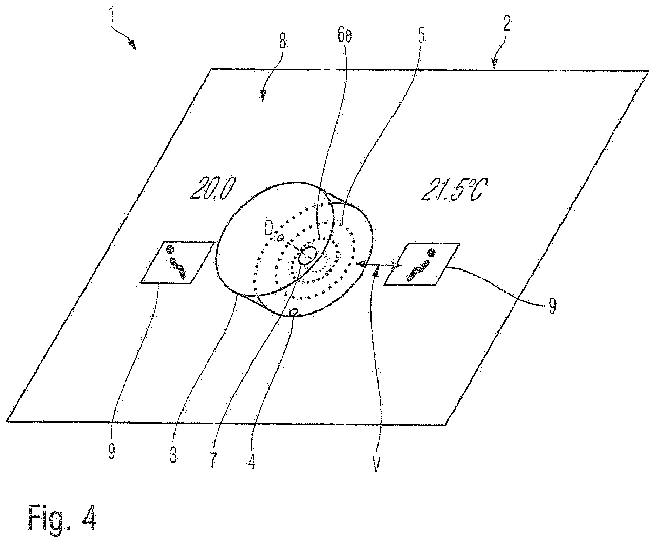

Anhand der Figur 4 wird eine weitere, sich aus dem erfindungsgemäßen Verfahren ergebende Eingabesituation erläutert. Auch hier ist lediglich ein zweites Element 6e der magnetischen bzw. magnetisierbaren Mittel dargestellt, welches einen möglichen Positionierort vorgibt. Wird das Eingabeteil 3 samt Sockel 5 aus dem durch das zweite Element 6e vorgegebenen, ursprünglichen Positionierort entlang einer der beiden alternativen jeweils zur Eingabefläche 8 parallelen Verschieberichtungen V verschoben und werden bei dieser Verschiebung einer der zwei alternativ vorgegebenen Auslöseorte erreicht, nämlich jeweils ein über der Anzeigeflächen 9 befindlicher Auslöseort, wird der Verstellung des Eingabeteils 3 um die Drehachse D als Auswahlfunktionalität eine spezielle der drei durch die Anzeigeflächen 9 symbolisierten Steuerfunktionen zugeordnet, was im vorliegenden Fall je nach Verschieberichtung bzw. erreichter Anzeigefläche 9 eine Temperaturvorgabesteuerung der fahrer- bzw. beifahrerseitigen Klimasteuerung ist. In einer weiteren Ausgestaltung kann vorgesehen sein, dass die Zuordnung nur dann erfolgt, wenn eine abschließende Rückkehr an den ursprünglichen, durch das zweite Element 6e definierten Positionierort als Auslöseort erfolgt ist. Die Anzeigeflächen dienen somit der Visualisierung der Zielorte, die selektiv auszuwählen und durch den Sockel 5 zwingend einzunehmen sind, um bei nachfolgender Rückkehr an den ursprünglichen Positionierort die besagte Zuordnung zu bewirken. Ferner ist einer weiteren Ausgestaltung vorgesehen, dass die Einhaltung einer händischen Bewegung, d.h. Verschiebung, des Sockels 5 entlang einer vorgegebenen Eingabestrecke dadurch zwingende Voraussetzung für die Zuordnung wird, dass mehrere entlang der Eingabestrecke definierte Zielorte vorgegeben sind, die bei der händischen Bewegung durch den Sockel 5 zwingend zu überstreichen sind, um mit Erreichen des Auslöseortes nach dem erfolgten Überstreichen aller Zielorte die Zuordnung der Schalt- bzw. Steuerfunktion zu triggern.

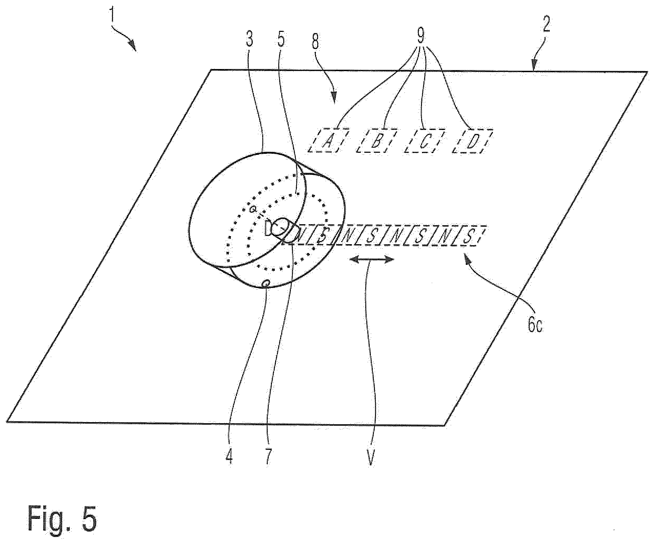

Figur 5 zeigt eine weitere Eingabesituation, bei der lediglich ein zweites Element 6c der magnetischen bzw. magnetisierbaren Mittel dargestellt ist, welches mehrere vorgegebene Positionierorte vorgibt, die jeder für sich ein Auslöseort darstellen. Hierbei handelt es sich um einen mehr als zweipoligen Permanentmagneten, dessen Polrichtungen sich parallel zur Eingabefläche 8 erstreckt, so dass mehrere Positionierorte entlang der Polrichtung P vorgegeben sin, an der der Sockel 5 magnetisch haftet und wobei beim händischen Verschieben des Eingabeteils 3 entlang der Polrichtung eine haptisch merkbares Feedback und eine Art magnetische Führung wahrgenommen wird. Anhand der Figur 4 wird nunmehr das erfindungsgemäße Verfahren nochmals erläutert. Wird das Eingabeteil 3 samt Sockel 5 entlang der Richtung V von einem zu einem anderen Positionierort entlang der Erstreckungsrichtung des zweiten Elements 6c verschoben, wird mit jedem neuen Positionierort ein vorgegebener Auslöseort erreicht, und der Verstellung des Eingabeteils 3 um die Drehachse D als Auswahlfunktionalität eine spezielle, sich aus der Selektion einer der drei durch die Anzeigeflächen 9 symbolisierten Steuerfunktionen zugeordnet, wobei die Anzeigeflächen 9 hier lediglich der Visualisierung dienen und keine Zielorte für die händische Verschiebung des Sockels 5 darstellen.

## Patentansprüche

1. Eingabegerät (1) aufweisend:
ein eine berührempfindliche Eingabefläche (8) bereitstellendes Touchpad oder ein die berührempfindliche Eingabefläche (8) bereitstellender Touchscreen (2), mit jeweils einer Berührdetektionseinrichtung (2b) zur Detektion einer Berührung der berührempfindlichen Eingabefläche (8) durch einen Bediener (B);
einen zur Positionierung auf der berührempfindlichen Eingabefläche (8) ausgebildeten Sockel (5), sowie ein um eine zur berührempfindlichen Eingabefläche (8) orthogonale Achse (D) drehbeweglich an dem Sockel (5) gelagertes Eingabeteil (3), um eine Vornahme einer händischen Bedieneingabe durch den Bediener (B) durch Verstellen des Eingabeteils (3) zu ermöglichen, welches einen am Sockel (5) oder Eingabeteil (3) festgelegten Stellungsgeber (4) zur berührungslosen Stellungsdetektion aufweist;
eine mit dem Stellungsgeber (4) zusammenwirkende Stellungsdetektionseinrichtung (2b) zur Detektion einer Stellung oder Verstellung des Eingabeteils (3), um dem Detektionsergebnis eine Schalt- und/oder Steuerfunktion zuzuordnen;
magnetische und/oder magnetisierbare Mittel zur Bewirkung einer lösbaren magnetischen Haftung des Sockels (5) wenigstens an zwei Positionierorten auf der berührempfindlichen Eingabefläche (8), welche ein sockelseitiges erstes Element (7) und wenigstens ein in oder unter der berührempfindlichen Eingabefläche (8) angeordnetes, mit dem ersten Element (7) magnetisch zusammenwirkendes, zweites Element (6a, 6b, 6c, 6d, 6e) aufweisen,
wobei die magnetischen und/oder magnetisierbaren Mittel mindestens zwei Positionierorte vorgeben und so ausgebildet sind, dass die magnetisch bewirkte überwindbare Haftung sich an den zwei Positionierorten unterscheidet,
**dadurch gekennzeichnet, dass**
ferner das Eingabegerät (1) eine Rasteinrichtung zur Erzeugung einer Rasthaptik während der Verstellung des Eingabeteils (3) aufweist, und dass die Rasthaptik an den zwei Positionierorten variiert, weil an einem der Positionierorte die magnetische Haftkraft im Vergleich zu der die Verdrehung hemmenden Wirkung eines Rasteingriffs der Rasteinrichtung so gering ausfällt, dass der Sockel (5) gegenüber der berührempfindlichen Eingabefläche (8) seine Haftreibung überwindend sich zu verdrehen vermag und sich an dem anderen Positionierort eine magnetische Festlegung des Sockels (5) einstellt.

2. Eingabegerät (1) gemäß Anspruch 1, wobei das zweite Element (6a, 6b, 6c, 6d, 6e) eine Maximalausdehnung parallel zur Ebene der Eingabefläche (8) aufweist, die weniger als 1/10, bevorzugt weniger als 1/20 der Maximalausdehnung der berührempfindlichen Eingabefläche (8) beträgt.

3. Eingabegerät (1) gemäß Anspruch 1, wobei das zweite Element (6a, 6b, 6c, 6d, 6e) eine Flächenausdehnung parallel zur Ebene der Eingabefläche (8) aufweist, die mehr als 50%, bevorzugt mehr als 75%, meist bevorzugt 100 % oder mehr, der der Eingabefläche (8) beträgt.

4. Eingabegerät (1) gemäß einem der vorhergehenden Ansprüche, wobei die Berührdetektionseinrichtung und/oder die Stellungsdetektionseinrichtung (2b) ausgebildet sind, ein händisches Überführen des Sockels (5) von einem ursprünglichen Positionierort zu einem Auslöseort entlang einer zur Eingabefläche (8) parallelen Richtung (V) zu detektieren und diesem Überführen als weitere Eingabefunktionalität eine Schalt- oder Steuerfunktion zuzuordnen.

5. Eingabegerät (1) gemäß dem vorhergehenden Anspruch, wobei ferner mindestens ein außerhalb des ursprünglichen Positionierortes und außerhalb des Auslöseortes liegender Zielort vorgegeben ist, welcher beim Überführen des Sockels (5) vom Sockel (5) zwingend zumindest vorübergehend eingenommen werden muss, um mit dem Überführen an den Auslöseort die Schalt- oder Steuerfunktion zuzuordnen.

6. Eingabegerät (1) gemäß einem der vorhergehenden Ansprüche, wobei die magnetischen und/oder magnetisierbaren Mittel so ausgebildet sind, dass durch magnetische Wechselwirkung ein händisches Verschieben des Sockels (5) magnetisch geführt ist.

7. Eingabegerät (1) gemäß einem der vorhergehenden Ansprüche, wobei das erste Element (7) und/oder das zweite Element (6c) mehr als zweipolig sind und eine sich parallel zur Eingabefläche (8) erstreckende Polausrichtung (P) aufweisen.

8. Eingabegerät (1) gemäß einem der vorhergehenden Ansprüche, wobei die Stellungsdetektionseinrichtung (2b) eine Detektionsschicht der Berührdetektionseinrichtung zur Detektion der Stellung oder Verstellung des Eingabeteils (3) beinhaltet.

9. Eingabegerät (1) gemäß einem der vorhergehenden Ansprüche, wobei der Stellungsgeber (4) und die Stellungsdetektionseinrichtung (2b) kapazitiv, induktiv, magnetisch oder optisch zusammenwirken, um ein stellungsabhängiges Detektionssignal zu erzeugen.

10. Eingabegerät (1) gemäß einem der vorhergehenden Ansprüche, wobei die Berührdetektionseinrichtung und/oder die Stellungsdetektionseinrichtung (2b) ausgelegt ist, eine Bewegung des Sockels entlang der berührempfindlichen Eingabefläche (8) ortsaufgelöst zu detektieren, beispielsweise mittels eines Arrays von Spulen induktiv oder mittels eines Arrays von Elektroden kapazitiv oder resistiv zu detektieren.

11. Verwendung des Eingabegeräts (1) gemäß einem der vorhergehenden Ansprüche in einem Kraftfahrzeug.

## Claims

1. Input device (1) having:
a touchpad providing a touch-sensitive input surface (8) or a touchscreen (2) providing the touch-sensitive input surface (8), each having a touch detection device (2b) detecting a touch on the touch-sensitive input surface (8) by an operator (B);
a base (5) designed to be positioned on the touch-sensitive input surface (8), and an input part (3) mounted on the base (5) such that it can move rotatably about an axis (D) orthogonal to the touch-sensitive input surface (8) in order to enable a manual operating input to be performed by the operator (B) by adjusting the input part (3), which has a position transmitter (4) fixed to the base (5) or the input part (3) for noncontact position detection;
a position detection device (2b) interacting with the position transmitter (4) for the detection of a position or adjustment of the input part (3), in order to assign a switching and/or control function to the detection result;
magnetic and/or magnetizable means for effecting releasable magnetic adhesion of the base (5) at least at two positioning locations on the touch-sensitive input surface (8), which has a first element (7) on the base and at least one second element (6a, 6b, 6c, 6d, 6e) arranged in or under the touch-sensitive input surface (8) and interacting magnetically with the first element (7),
wherein the magnetic and/or magnetizable means predefine at least two positioning locations and are designed such that the magnetically effected adhesion, which can be overcome, differs at the two positioning locations,
**characterized in that**
the input device (1) additionally has a latching device for producing a latching feel during the adjustment of the input part (3), and **in that** the latching feel varies at the two positioning locations, because, at one of the positioning locations, the magnetic adhesive force is so low in comparison with the action of a latching engagement of the latching device which inhibits the rotation that the base (5) is able to rotate with respect to the touch-sensitive input surface (8), overcoming its adhesive friction, and magnetic fixing of the base (5) is established at the other positioning location.

2. Input device (1) according to Claim 1, wherein the second element (6a, 6b, 6c, 6d, 6e) has a maximum extent parallel to the plane of the input surface (8) which is less than 1/10, preferably less than 1/20, of the maximum extent of the touch-sensitive input surface (8).

3. Input device (1) according to Claim 1, wherein the second element (6a, 6b, 6c, 6d, 6e) has a surface extent parallel to the plane of the input surface (8) which is more than 50%, preferably more than 75%, most preferably 100% or more, of that of the input surface (8).

4. Input device (1) according to one of the preceding claims, wherein the touch detection device and/or the position detection device (2b) are designed to detect a manual transfer of the base (5) from an original positioning location to a triggering location along a direction (V) parallel to the input surface (8) and to assign a switching or control function to this transfer as further input functionality.

5. Input device (1) according to the preceding claim, wherein, in addition, at least one target location located outside the original positioning location and outside the triggering location is predefined which, when transferring the base (5) must necessarily be assumed at least temporarily by the base (5) in order to assign the switching or control function to the transfer to the triggering location.

6. Input device (1) according to one of the preceding claims, wherein the magnetic and/or magnetizable means are designed such that a manual displacement of the base (5) is guided magnetically by magnetic interaction.

7. Input device (1) according to one of the preceding claims, wherein the first element (7) and/or the second element (6c) are more than two-pole and have a pole orientation (P) extending parallel to the input surface (8) .

8. Input device (1) according to one of the preceding claims, wherein the position detection device (2b) includes a detection layer of the touch detection device for detecting the position or adjustment of the input part (3).

9. Input device (1) according to one of the preceding claims, wherein the position transmitter (4) and the position detection device (2b) interact capacitively, inductively, magnetically or optically in order to generate a position-dependent detection signal.

10. Input device (1) according to one of the preceding claims, wherein the touch detection device and/or the position detection device (2b) is designed to detect movement of the base along the touch-sensitive input surface (8) in a spatially resolved manner, for example inductively by means of an array of coils or capacitively or resistively by means of an array of electrodes.

11. Use of the input device (1) according to one of the preceding claims in a motor vehicle.

## Revendications

1. Appareil de saisie (1), comprenant :
un pavé tactile mettant à disposition une surface de saisie tactile (8) ou un écran tactile (2) mettant à disposition la surface de saisie tactile (8), comprenant respectivement un dispositif de détection de toucher (2b) destiné à détecter un toucher de la surface de saisie tactile (8) par un opérateur (B) ;
un socle (5) configuré pour être positionné sur la surface de saisie tactile (8), ainsi qu'une pièce de saisie (3) montée à rotation sur le socle (5) autour d'un axe (D) orthogonal par rapport à la surface de saisie tactile (8), afin de rendre possible un accomplissement d'une saisie d'opération manuelle par l'opérateur (B) par un déplacement de la pièce de saisie (3), lequel ou laquelle possède un transmetteur de position (4) fixé au socle (5) ou à la pièce de saisie (3) servant à la détection de position sans contact ;
un dispositif de détection de position (2b) qui coopère avec le transmetteur de position (4) et sert à la détection d'une position ou d'un déplacement de la pièce de saisie (3) afin d'affecter le résultat de détection à une fonction de commutation et/ou de commande ;
des moyens magnétiques et/ou magnétisables destinés à produire une adhérence magnétique amovible du socle (5) au moins à deux lieux de positionnement sur la surface de saisie tactile (8), lesquels possèdent un premier élément (7) côté socle et au moins un deuxième élément (6a, 6b, 6c, 6d, 6e) disposé dans ou sous la surface de saisie tactile (8) et coopérant avec le premier élément (7),
les moyens magnétiques et/ou magnétisables prédéfinissant au moins deux lieux de positionnement et étant configurés de telle sorte que l'adhérence surmontable provoquée magnétiquement est différente au niveau des deux lieux de positionnement,
**caractérisé en ce que**
l'appareil de saisie (1) possède en outre un dispositif d'encliquetage destiné à générer une sensation d'encliquetage pendant le déplacement de la pièce de saisie (3),
et **en ce que** la sensation d'encliquetage varie au niveau des deux lieux de positionnement, car la force d'adhérence magnétique au niveau de l'un des lieux de positionnement chute si peu en comparaison de l'effet inhibiteur de torsion d'une intervention d'encliquetage du dispositif d'encliquetage que le socle (5) est capable d'effectuer une torsion par rapport à la surface de saisie tactile (8) en surmontant sa friction d'adhérence et une fixation magnétique du socle (5) s'établit à l'autre lieu de positionnement.

2. Appareil de saisie (1) selon la revendication 1, le deuxième élément (6a, 6b, 6c, 6d, 6e) possédant une étendue maximale parallèle au plan de la surface de saisie (8), laquelle est égale à moins de 1/10, de préférence à moins de 1/20 de l'étendue maximale de la surface de saisie tactile (8).

3. Appareil de saisie (1) selon la revendication 1, le deuxième élément (6a, 6b, 6c, 6d, 6e) possédant une étendue en surface parallèle au plan de la surface de saisie (8), laquelle est supérieure à 50 %, de préférence supérieure à 75 %, plus préférablement à 100 % ou plus à la surface de saisie tactile (8).

4. Appareil de saisie (1) selon l'une des revendications précédentes, le dispositif de détection de toucher et/ou le dispositif de détection de position (2b) étant configurés pour détecter un transfert manuel du socle (5) d'un lieu de positionnement initial à un lieu de déclenchement le long d'une direction (V) parallèle à la surface de saisie (8) et affecter à ce transfert une fonction de commutation ou de commande en tant que fonctionnalité de saisie supplémentaire.

5. Appareil de saisie (1) selon l'une des revendications précédentes, au moins un lieu cible, qui se trouve hors du lieu de positionnement initial et hors du lieu de déclenchement, étant en outre prédéfini, lequel, lors du transfert du socle (5) doit être au moins temporairement adopté par le socle (5) afin d'affecter la fonction de commutation ou de commande avec le transfert au lieu de déclenchement.

6. Appareil de saisie (1) selon l'une des revendications précédentes, les moyens magnétiques et/ou magnétisables étant configurés de telle sorte qu'un changement de place manuel du socle (5) est guidé magnétiquement par interaction magnétique.

7. Appareil de saisie (1) selon l'une des revendications précédentes, le premier élément (7) et/ou le deuxième élément (6c) étant plus que bipolaires et possédant un alignement polaire (P) qui s'étend parallèlement à la surface de saisie (8).

8. Appareil de saisie (1) selon l'une des revendications précédentes, le dispositif de détection de position (2b) contenant une couche de détection du dispositif de détection de toucher servant à la détection de la position ou du déplacement de la pièce de saisie (3) .

9. Appareil de saisie (1) selon l'une des revendications précédentes, le transmetteur de position (4) et le dispositif de détection de position (2b) coopérant de manière capacitive, inductive, magnétique ou optique afin de générer un signal de détection dépendant de la position.

10. Appareil de saisie (1) selon l'une des revendications précédentes, le dispositif de détection de toucher et/ou le dispositif de détection de position (2b) étant conçus pour détecter un mouvement du socle le long de la surface de saisie tactile (8) avec résolution du lieu, par exemple de manière inductive au moyen d'un réseau de bobines ou de manière capacitive ou résistive au moyen d'un réseau d'électrodes.

11. Utilisation de l'appareil de saisie (1) selon l'une des revendications précédentes dans un véhicule automobile.
